# EUROPÄISCHE PATENTANMELDUNG

(11) **EP 3 553 032 A1**
(43) Veröffentlichungstag der Anmeldung: **16.10.2019**
(21) Anmeldenummer: 18166818.7
(22) Anmeldetag: 11.04.2018
(51) Int. Cl.: C02F 1/32, C02F 1/72, C02F 1/78

(54) **REAKTORMODUL FÜR EINEN PHOTOKATALYTISCHEN OXIDATIONSREAKTOR SOWIE PHOTOKATALYTISCHER OXIDATIONSREAKTOR**

(71) Anmelder: Blomeier, Maximilian, 56410 Montabaur (DE); Maier, Peter, 78183 Hüpfingen (DE); Weber, Markus, 56424 Staudt (DE)
(72) Erfinder: Blomeier, Maximilian, 56410 Montabaur (DE); Maier, Peter, 78183 Hüpfingen (DE); Weber, Markus, 56424 Staudt (DE)
(74) Vertreter: Patentanwälte Bauer Vorberg Kayser

(57) **Zusammenfassung**

Die vorliegende Erfindung betrifft einen photokatalytischen Oxidationsreaktor zur Oxidation von mit organischen Schadstoffen belasteten Fluiden aufweisend:
- mindestens ein Reaktormodul sowie
- mindestens ein außerhalb des Reaktormoduls angeordnetes LED-basiertes Lichtmodul.

## Beschreibung

Die vorliegende Anmeldung betrifft ein Reaktormodul sowie ein LED-basiertes Lichtmodul zur Verwendung in einem photokatalytischen Oxidationsreaktor sowie einen solchen photokatalytischen Oxidationsreaktor zur Oxidation von mit Schadstoffen belasteten Fluiden, insbesondere Abwässern. Weiterhin betrifft die vorliegende Erfindung ein Verfahren zur Oxidation von mit Schadstoffen belasteten Abwässern enthaltend den erfindungsgemäßen photokatalytischen Oxidationsreaktor.

Die keimtötende, desinfizierende Wirkung von UV-Licht ist bekannt und wird häufig bei der Wasseraufbereitung verwendet. Beispielsweise werden UV-Strahler seit vielen Jahren für die Desinfektion von Trinkwasser und Abwasser, zur Desinfektion von Arbeitsbereichen in biologischen Laboratorien und in Klimaanlagen eingesetzt. Im Gegensatz zu chemischen Wasserdesinfektionsverfahren beruht die UV-Desinfektion auf einem physikalischen Prozess. Durch Absorption der Strahlung von den Nukleinsäuren im Zellkern von Mikroorganismen wird die Nukleinsäurestruktur derart verändert, dass eine Replikation unmöglich wird. Die Mikroorganismen, wie Bakterien oder Viren, verlieren somit die Infektionsfähigkeit. Mit entsprechender Dosis und Wellenlänge lassen sich mehr als 99,9 % aller Pathogene innerhalb von Sekundenbruchteilen unschädlich machen.

Die energiereiche, kurzwellige UV-Strahlung weist dabei hauptsächlich eine Wellenlänge von 200 bis 280 nm auf und fällt in den sogenannten kurzwelligen UVC-Bereich.

Zum Abbau von mit Schadstoffen belasteten Abwässern, beispielsweise in der Form von organischen Mikroschadstoffen und/oder anthropogenen Spurenstoffen sind reine UV-Desinfektionsverfahren nicht geeignet. Hierzu sind vielmehr photokatalytische Oxidationsreaktoren erforderlich.

Einen solchen photokatalytischen Oxidationsreaktor beschreibt beispielsweise die DE 10 2014 009 527 A1. Dieser besteht aus einem Gehäusekörper mit einem Einlass und einem Auslass, der mit dem schadstoffbelasteten Abwasser durchströmt wird und im Inneren eine Lichtquelle in Form einer UV-Lampe aufweist. Solche Oxidationsreaktoren sind spezifisch nach Kundenvorgaben gefertigt und somit nur für vorgegebene Volumenströme ausgelegt.

Aufgabe der vorliegenden Erfindung ist es daher ein gegenüber dem Stand der Technik verbessertes Konzept eines photokatalytischen Oxidationsreaktors bereitzustellen. Weiterhin ist Aufgabe der vorliegenden Erfindungen einen photokatalytischen Oxidationsreaktor bereitzustellen, der einen gegenüber dem Stand der Technik verbesserten Wirkungsgrad aufweist.

Gelöst werden diese Aufgaben durch ein Reaktormodul mit den Merkmalen des Patentanspruchs 1, einem LED-basierten Lichtmodul mit den Merkmalen des Patentanspruchs 10, einem photokatalytischen Oxidationsreaktor mit den Merkmalen des Patentanspruchs 12 sowie einem Verfahren mit den Merkmalen des Patentanspruchs 13.

Vorteilhafte Ausgestaltungen und Varianten der Erfindung ergeben sich aus den abhängigen Ansprüchen und der nachfolgenden Beschreibung. So können die in den Ansprüchen einzeln aufgeführten Merkmale in beliebiger, technisch sinnvoller Weise miteinander als auch mit den in der nachfolgenden Beschreibung näher erläuterten Merkmalen kombiniert werden und andere vorteilhafte Ausführungsvarianten der der Erfindung darstellen.

Das erfindungsgemäße Reaktormodul zur Verwendung in einem photokatalytischen Oxidationsreaktor weist mindestens zwei mittels eines Distanzelements verbundene lichtdurchlässige Plattenelemente auf, die einen durchströmbaren Reaktionsraum ausbilden.

Vorzugsweise bestehen die lichtdurchlässigen Plattenelemente aus einem Material ausgewählt aus der Gruppe enthaltend natürliches oder synthetisches Quarzglas, Borosilikatglas und/oder einem lichtdurchlässigen Kunststoff, insbesondere Polymethylmethacrylat (PMMA) oder Polyethylenterephthalat (PET).

Die Plattenelemente weisen dabei vorzugsweise eine rechteckige Form auf und können in ihren Abmessungen variieren. In der einfachsten Form können die beiden Plattenelemente eine quadratische Form aufweisen. Mehr bevorzugt weisen die Plattenelemente jedoch zwei unterschiedliche Kantenlängen auf, so dass das Verhältnis von Länge/Breite mindestens größer eins ist. Ein bevorzugter Bereich des Verhältnisses von Länge/Breite eines Plattenelements beträgt 3 bis 15.

Eine besonders bevorzugte Größe eines Plattenelements beträgt beispielsweise das Format 1000 x 260 mm. Eine weitere besonders bevorzugte Größe eines Plattenelements beträgt beispielsweise das Format 500 x 50 mm.

Die beiden lichtdurchlässigen Plattenelemente sind mittels eines Distanzelements miteinander verbunden und bilden den durchströmbaren Reaktionsraum aus. Als Distanzelemente können vorzugsweise zwei weitere rechteckige oder stabförmige Plattenelemente verwendet werden, die die beiden lichtdurchlässigen Plattenelemente stoff-, kraft- und/oder formschlüssig miteinander verbinden.

Mehr bevorzugt sind die zwei lichtdurchlässigen Plattenelemente mittels zweier Distanzstreifen, die beispielsweise einen lichtbeständigen Kunststoff umfassen, miteinander verbunden. Die Distanzstreifen sind zwischen den beiden lichtdurchlässigen Plattenelementen angeordnet und erstrecken sich jeweils im Randbereich entlang der gesamten Länge der Plattenelemente. Ein besonders bevorzugter Kunststoff ist hierbei Polytetrafluorethylen (PTFE).

In einer anderen vorteilhaften Ausführungsvariante bestehen die Distanzstreifen aus einem metallischen Werkstoff, beispielsweise einem Edelstahl.

Gemäß einer besonders bevorzugten Ausführungsvariante beträgt der Abstand zwischen den beiden lichtdurchlässigen Plattenelemente 1 bis 30 mm, mehr bevorzugt 3 bis 10 mm, so dass das resultierende Reaktormodul besonders flach ausgestaltbar ist.

Der Reaktionsraum weist vorzugswese ein Verhältnis von Länge/Höhe von mindestens 50, mehr bevorzugt 100 und am meisten bevorzugt von mindestens 200 auf, wobei die Länge sich auf die Länge des Plattenelements und die Höhe auf den Abstand zwischen den beiden lichtdurchlässigen Plattenelemente bezieht.

Weiterhin weist das erfindungsgemäße Reaktormodul innerhalb des Reaktionsraums ein statisches Mischelement auf, mit dem das den Reaktionsraum durchströmende Fluid durchmischt wird.

Mit dem Begriff des statischen Mischelements wird im Sinne der vorliegenden Erfindung ein Gegenstand oder eine Gruppe von Gegenständen verstanden, die innerhalb des durchströmbaren Reaktionsraums ortsfest, d.h. unbeweglich, angeordnet sind und ein Volumenanteil des Reaktionsraum von mindestens 20 % einnehmen.

Vorzugsweise weist das statische Mischelement einen Volumenanteil im Bereich von 0,2 bis 0,8, mehr bevorzugt 0,2 bis 0,6 des Reaktionsraums auf.

In einer weiteren vorteilhaften Ausführungsvariante ist vorgesehen, dass sich das statische Mischelement im Wesentlichen über den gesamten Reaktionsraum erstreckt. Das Mischelement erstreckt sich somit in seiner Längsausrichtung von einem Einlass bis zu einem Auslass und in der Breite von einem Distanzelement bis zum gegenüberliegenden Distanzelement.

Das Mischelement umfasst vorteilhafterweise Kugelkörper und/oder strukturierte Plattenkörper.

Die Kugelkörper bestehen vorzugsweise aus einem Material ausgewählt aus der Gruppe umfassend Kunststoff, Glas oder Metall, insbesondere Edelstahl. Ein besonders bevorzugtes Metall ist Titan.

Weiterhin weisen die Kugelkörper vorzugsweise einen Durchmesser von 1 bis 30 mm, mehr bevorzugt von 3 bis 10 mm auf.

Die einzelnen und zu einer Gruppe zusammengefassten Kugelkörper, die das Mischelement bilden, können gemäß einer weiteren vorteilhaften Ausführungsvariante einheitliche oder unterschiedliche Durchmesser aufweisen. So können beispielsweise Kugelkörper mit einem Durchmesser von 4,5 und 6 mm in einer gemeinsamen Anordnung in einem Verhältnis von 1:1 innerhalb des durchströmbaren Reaktionsraums angeordnet sein und das Mischelement ausbilden.

Um das Mischelement innerhalb des Reaktionsraums auszubilden, können die Kugelkörper unterschiedlich angeordnet sein. Bevorzugt ist eine Anordnung in der die Kugelkörper linear zueinander angeordnet sind. Bei der linearen Anordnung sind die Kugelkörper sowohl entlang der Breite als auch entlang der Länge des Reaktionsraums in jeweils einer gemeinsamen Linie angeordnet, wobei beide Linien einen Winkel von 90° einschließen. Besonders bevorzugt ist eine Anordnung in der die Kugelkörper zueinander versetzt und in einer dichtesten Packung angeordnet sind.

Weiterhin ist vorzugsweise vorgesehen, dass die Kugelkörper in einer einlagigen Anordnung innerhalb des Reaktionsraums angeordnet sind. Bei einer einlagigen Anordnung entspricht der Abstand der beiden lichtdurchlässigen Plattenelemente zueinander im Wesentlichen dem Durchmesser der Kugelkörper. Mehr bevorzugt ist eine Anordnung der Kugelkörper im Bereich von ≥ 1 und ≤ 1,5-fachen des Durchmessers der Kugelkörper. Hierbei entspricht der Abstand der beiden lichtdurchlässigen Plattenelemente zueinander im Wesentlichen dem entsprechenden Bereich.

Weiterhin hat sich als besonders vorteilhaft erwiesen, wenn die Kugelkörper innerhalb des durchströmbaren Reaktionsraums ortsfest fixiert sind, beispielsweise indem sie durch die jeweiligen sie umgebenden Flächen in einer der genannten Anordnungen verspannt werden.

In einer anderen bevorzugten Ausführungsvariante umfasst das Mischelement mindestens einen strukturierten Plattenkörper, mehr bevorzugt zwei strukturierten Plattenkörpern, die stoff- und/oder formschlüssig miteinander verbunden sind.

Die strukturierten Plattenkörper bestehen vorzugsweise aus einem Material ausgewählt aus der Gruppe umfassend lichtstabile Kunststoffe, Edelstahl oder Titan.

Zur Bildung der Strukturen können unterschiedliche geometrische Formen in zueinander linearer oder versetzter Anordnung ausgebildet werden, mit dem Ziel hierbei die Oberfläche des resultierenden Plattenkörpers zu vergrößern. Bevorzugte Formen sind beispielsweise Noppenkörper oder Pyramidenkörper. Auch längliche Formen, wie beispielsweise Tränen haben sich als vorteilhaft erwiesen.

Besonders bevorzugt weisen die Plattenkörper konvex ausgebildete Strukturen auf, die über die gesamte Oberfläche der Plattenkörper in einer zueinander versetzten und beabstandeten Anordnung angeordnet sind. Durch die beabstandete Anordnung weist der Plattenkörper sowohl planare als auch gewölbte Oberflächenanteile auf. Um eine möglichst große Oberfläche zu erzeugen, sind die konvex ausgebildeten Strukturen nahezu Halbkugel-förmig ausgebildet.

In einer weiteren vorteilhaften Ausführungsvariante weist der Plattenkörper an dem Übergangsbereich zwischen der planaren Oberfläche und den Strukturen einen abgerundeten Eckbereich auf, so dass das resultierende Mischelement schattenfrei ausleuchtbar ist.

Weiterhin weist das erfindungsgemäße Reaktormodul ein innerhalb des Reaktionsraums angeordnetes photokatalytisches Mittel auf, das zur Bildung von Hydroxylradikalen geeignet ist.

In einer vorteilhaften Ausführungsvariante ist das Mischelement mit dem photokatalytischen Mittel beschichtet, wobei die Beschichtung eine einzige Modifikation, mehr bevorzugt zwei unterschiedliche Modifikationen des photokatalytischen Mittels umfasst. Sofern das photokatalytische Mittel Titandioxid umfasst, so ist das Mischelement vorzugsweise mit Titandioxid in Form der Anatas-Modifikation beschichtet.

In einer besonders bevorzugten Ausführungsvariante weist das Mischelement zunächst eine erste Schicht Titandioxid in der Rutil-Modifikation und eine weitere, darauf angeordnete, Schicht Titandioxid in der Anatas-Modifikation auf.

In einer weiteren besonders bevorzugten Ausführungsvariante besteht das Mischelement aus dem Werkstoff Titan und weist zudem eine Titandioxid-basierte Beschichtung als photokatalytisches Mittel auf. Überraschenderweise hat sich gezeigt, dass ein derart ausgebildetes Mischelement eine besonders hohe Langzeitstabilität aufweist.

Ein weiteres bevorzugtes photokatalytisches Mittel, das auch in Kombination mit Titandioxid zu Anwendung kommen kann, ist Molybdändisulfid.

In einer weiteren vorteilhaften Weiterbildung ist vorgesehen, dass die lichtdurchlässigen Plattenelemente innenseitig mit dem photokatalytischen Mittel beschichtet sind. Die Beschichtung ist derart gewählt, dass die mit dem photokatalytischen Mittel beschichteten lichtdurchlässigen Plattenelemente einen Transmissionsgrad für Licht, insbesondere für UV-Licht, im Bereich von 0,5 bis 0,9, mehr bevorzugt 0,7 bis 0,8 aufweisen, so dass neben einer ausreichenden katalytischen Aktivität zudem eine ausreichende Bestrahlungsstärke gewährleistet werden kann.

Durch eine Kombination von mit dem photokatalytischen Mittel beschichteten Plattenelementen und dem Mischelement weist das Reaktormodul vorzugsweise eine mindestens um den Faktor 5 größere Oberfläche auf, als eine einseitig mit einem photokatalytischen Mittel beschichtete glatte Oberfläche.

In einer weiteren besonders bevorzugten Ausführungsvariante weist das statische Mischelement und/oder die lichtdurchlässigen Plattenelemente eine mittlere Rauheit Rₐ im Bereich von 20 bis 50 µm auf. Durch die raue Oberfläche des Mischelements und/oder der lichtdurchlässigen Plattenelemente wird, durch Bildung von Mikroturbulenzen, eine verbesserte Durchmischung des Fluids innerhalb des Reaktionsraum erzielt sowie die photokatalytische Oberfläche vergrößert, so dass der Wirkungsgrad nochmals gesteigert wird.

Sofern als Mischelement strukturierte Plattenkörper zur Anwendung kommen, so hat sich weiterhin als besonders vorteilhaft erwiesen, wenn das Reaktormodul derart ausgebildet ist, dass der Abstand zwischen dem Mischelement und dem lichtdurchlässigen Plattenelement möglichst klein ist. Vorzugsweise beträgt der Abstand kleiner 3 mm, mehr bevorzugt kleiner 1 mm. Besonders bevorzugt beträgt der Abstand im Bereich von 0,1 bis 0,5 mm.

Ein weiterer Aspekt der vorliegenden Erfindung betrifft ein LED-basiertes Lichtmodul zur Verwendung in einem photokatalytischen Oxidationsreaktor. Das erfindungsgemäße LED-basierte Lichtmodul umfasst ein Kühlelement, das vorzugsweise in der Form eines flach ausgebildeten Trägerelements ausgebildet ist, und eine Vielzahl von auf dem Kühlelement angeordneter lichtemittierender-Dioden, wobei die lichtemittierenden-Dioden auf dem Kühlelement ein- oder zweiseitig angeordnet sind.

Der photochemische Prozess mit LED-Technik bietet erheblich Vorteile gegenüber dem Stand der Technik, insbesondere gegenüber herkömmlicher Quecksilber-Strahlertechnik. Die Vorteile sind insbesondere:
- eine klar definierte Wellenlänge ohne störende Nebenpeaks
- eine schonende Verfahrensweise
- kein Wärmeeintrag in das zu behandelnde Medium
- selektive Umsetzung und daher keine störenden Nebenreaktionen
- gefahrlose Niederspannungstechnik
- lange Lebensdauer und einfache Entsorgung der lichtemittierenden-Dioden
- Schadstoffabbau weitestgehend ohne Zusatz von aggressiven Chemikalien

In seiner einfachsten Form kann das Kühlelement vorzugsweise stabförmig ausgebildet sein. In einer anderen bevorzugten Ausführungsvariante kann das Kühlelement einen U-förmigen mittleren Bereich und zwei flanschartige Bereiche aufweisen, die zugleich als Auflageflächen dienen können. In einer weiteren bevorzugten Ausführungsvariante kann das Kühlelement innerhalb des U-förmigen mittleren Bereichs einen weiteren invers ausgebildeten U-förmigen Bereich aufweisen, so dass das Kühlelement zweiseitig mit lichtemittierenden-Dioden versehen werden kann und zu beiden Seiten Auflageflächen aufweist.

In einer besonders vorteilhaften Ausführungsform umfasst das Kühlelement ein rechteckig ausgebildetes Profil, welches innenseitig Kühlrippen aufweist.

Vorzugsweise besteht das Kühlelement aus einem Material umfassend Aluminium, Graphit, Kupfer, Magnesium, Messing, Silber, Wolfram, Zink und/oder Mischungen hiervon.

Die lichtemittierenden-Dioden des LED-basierten Lichtmodul emittieren vorzugsweise Licht im Wellenlängenbereich von 200 - 1000 nm, mehr bevorzugt im Wellenlängenbereich von 315 - 400 nm, mit einer Hauptwelle von 365 nm.

Die geeignete Wellenlänge ist hierbei abhängig von der Art des photokatalytischen Mittels. Zur Auslösung der chemischen Zersetzungsreaktion der organischen Schadstoffe, die beispielsweise über die Bildung von OH-Radikalen verläuft, ist im Falle von Titandioxid oder Molybdändisulfid eine Wellenlänge im UVA-Bereich erforderlich.

Nachfolgend wird genauer auf die weiteren Aspekte der vorliegenden Erfindung eingegangen. Zur Vermeidung von Wiederholungen wird auf die vorstehende Diskussion der Merkmale und Vorteile der diversen Ausgestaltungen des erfindungsgemäßen Reaktormoduls und LED-basierten Lichtmoduls verwiesen, die unmittelbar auf die nachfolgende Diskussion der verschiedenen Ausgestaltungen und Weiterbildungen übertragbar sind.

Ein weiterer Aspekt der vorliegenden Erfindung betrifft einen photokatalytischen Oxidationsreaktor zur Oxidation von mit organischen Schadstoffen belasteten Fluiden, insbesondere Abwässern aufweisend mindestens ein erfindungsgemäßes Reaktormodul sowie mindestens ein außerhalb des Reaktormoduls angeordnetes LED-basiertes Lichtmodul.

Organische Schadstoffe sind beispielsweise Medikamentenreste, Biozide, Hormone, multiresistente Keime sowie diverse in Fluiden auffindbare organische Chemikalien wie Duftstoffe, Waschmittel etc..

Durch die Verwendung des erfindungsgemäßen Reaktormoduls in Kombination mit den erfindungsgemäßen LED-basierten Lichtmodulen kann der Wirkungsgrad des erfindungsgemäßen Oxidationsreaktors gegenüber aus dem Stand der Technik bekannten Oxidationsreaktoren signifikant gesteigert werden, so dass die Reaktoren besonders klein und kompakt dimensioniert werden können und beispielsweise bei sogenannten "Point of Use" Anwendung, d.h. im Bereich einer Entnahmestelle, einsetzbar sind. Aufgrund der modularen Bauweise wird zudem ein äußerst flexibles Konzept eines photokatalytischen Oxidationsreaktors bereitgestellt, mit dem unterschiedliche Volumenstrom-Vorgaben in kürzester Zeit umsetzbar sind. So können beispielsweise durch eine Reihen- oder eine Serienschaltung Volumenströme von wenigen Litern pro Stunde bis zur großtechnischer Anwendung realisiert werden. Daraus ergibt sich zudem eine große Fertigungstiefe bei geringer Lagerhaltung. Weiterhin erweist sich der getrennte Aufbau besonders vorteilhaft bei der Wartung- und Instandsetzung.

In einer besonders bevorzugten Ausführungsvariante umfasst der photokatalytische Oxidationsreaktor daher mehrere in Reihe oder parallel geschalteter erfindungsgemäßer Reaktormodule sowie mehrere außerhalb der Reaktormodule angeordnete LED-basierte Lichtmodule.

In einer weiteren besonders bevorzugten Ausführungsvariante sind in definierten Abständen Entnahmestellen vorgesehen, durch die Proben von dem Fluid entnommen werden können.

Bevorzugte Anwendung findet der erfindungsgemäße Oxidationsreaktor in Krankenhäusern, medizinischen Laboren und bei der Grund- und Abwasseraufbereitung.

Dadurch, dass die LED-basierten Lichtmodule außerhalb des Reaktormoduls angeordnet sind, wird die von den Lichtmodulen in Folge der elektrischen Verlustleistung entstehende Wärme, im Reaktor minimiert und strahlt nicht in das Fluid hinein.

Vorzugsweise sind die LED-basierten Lichtmodule derart im Oxidationsreaktor angeordnet, dass der gesamte Reaktionsraum schattenfrei ausgeleuchtet wird. Hierbei hat sich insbesondere eine 4 bis 6-fache Überlappung der Lichtkegel als besonders vorteilhaft erwiesen.

Besonders bevorzugt sind die LED-basierten Lichtmodule entlang der Längsachse des Reaktionsraums angeordnet. In Abhängigkeit der Maße des Reaktormoduls können ein oder mehrere parallel zueinander angeordnete Lichtmodule entlang der Längsachse des Reaktionsraums vorgesehen werden.

Da die LED-basierten Lichtmodule bei sehr geringen Spannungen betreibbar sind, ist der erfindungsgemäße photokatalytische Oxidationsreaktor insbesondere mit einer Batterie, einem Akkumulator oder einer mit dem Akkumulator elektrisch verbundenen regenerativen Energiequelle, beispielsweise einem Solarpanel, betreibbar.

Grundsätzlich eignet sich der erfindungsgemäße Oxidationsreaktor zur Verwendung in einer Trinkwasseraufbereitungsanlage, wobei das Abwasser hierbei eine Trübung von maximal 0,3 FNU aufweisen sollte.

Geeignete Mittel zur Entfernung von Feststoffen sind dem Fachmann weitestgehend bekannt und können diverse Filter, Membranen, Ausflockungsmittel etc. umfassen.

In einem weiteren Aspekt betrifft die vorliegende Erfindung zudem ein Verfahren zur Oxidation von mit organischen Schadstoffen belasteten Fluiden, insbesondere Abwässern unter Verwendung des erfindungsgemäßen photokatalytischen Oxidationsreaktors, wobei in einem ersten Schritt ein mit organischen Schadstoffen belastetes Fluid in den erfindungsgemäßen Oxidationsreaktor eingeleitet wird und das Fluid in einem weiteren Schritt oxidiert wird, so dass ein schadstofffreies Fluid erhalten wird.

Vorzugsweise erfolgt das Einleiten des Fluids pulsierend. Durch das pulsierende Einleiten des zu desinfizierenden Trinkwassers wird ein zusätzlicher Mischungseffekt eingebracht, der sich positiv auf den Wirkungsgrad auswirkt.

Um das mit organischen Schadstoffen belastete Fluid pulsierend einzuleiten, wird vorzugsweise eine Schlauchpumpe, eine Kolbenpumpe oder eine Membranpumpe etc. eingesetzt.

In speziellen Anwendungen können dem mit organischen Schadstoffen belasteten Fluid Ozon und/oder eine Wasserstoffperoxid-haltige Lösung zugesetzt werden. Das Ozon und/oder die Wasserstoffperoxid-haltige Lösung kann dem Prozess über an sich dem Fachmann bekannte Vorrichtungen in gasförmiger oder flüssiger Form zugeführt werden.

Eine geeignete Wasserstoffperoxid-haltige Lösung weist vorzugsweise eine Konzentration von 30 bis 50 Gew.-% auf.

Weiterhin wird gemäß einer ganz besonders bevorzugten Ausführungsvariante jedes Reaktormodul des erfindungsgemäßen Oxidationsreaktors beidseitig mit Licht, insbesondere mit UVA-Licht bestrahlt, so dass der Reaktionsraum schattenfrei ausgeleuchtet wird.

Das hier vorliegend in diversen Ausführungsvarianten beschriebene erfindungsgemäße Konzept ist in einer abgewandelten Ausgestaltung ebenfalls bei der Photolyse einsetzbar. So würde sich ein Reaktormodul für einen Photolysereaktor darin unterscheiden, dass innerhalb des Reaktionsraums kein photokatalytisches Mittel vorgesehen ist. Das innerhalb des Reaktionsraums angeordnete Mischelement würde vorzugsweise eine spiegelnde Oberfläche aufweisen, welche auf die entsprechende Wellenlänge des Lichts hin abgestimmt ist. Weiterhin könnte in einer vorteilhaften Variante ein Teil der innenseitigen Flächen eine spiegelnde Beschichtung aufweisen. Das innerhalb des Reaktionsraums angeordnete Mischelement könnte um ein dynamisches Mischelement erweitert werden. Abhängig von der photochemischen Reaktion, die mit einem derartigen Photolysereaktor umsetzbar sein soll, könnte das LED-basierte Lichtmodul weiterhin Licht im Wellenlängenbereich von 200 nm (UV) bis 1000 nm (IR) emittieren.

Nachfolgend wird die vorliegende Erfindung anhand von Ausführungsbeispielen näher erläutert. Diese Ausführungsbeispiele sind beispielhaft und nicht einschränkend zu verstehen und sollen den Fachmann in die Lage versetzen, die Erfindung auszuführen. Die Ausführungsbeispiele werden anhand von Zeichnungen und Beispielen näher erläutert. Es wird darauf hingewiesen, dass die in den Ausführungsbeispielen genannten technischen Merkmale, insbesondere technischen Mittel, einzeln und auch in Kombination miteinander vom Fachmann zur Weiterbildung der erfindungsgemäßen Gegenstände herangezogen werden können.
Fig. 1 zeigt eine schematische Darstellung einer ersten Ausführungsvariante des erfindungsgemäßen photokatalytischen Oxidationsreaktors im Längsschnitt,
Fig. 2 zeigt eine schematische Darstellung einer ersten Ausführungsvariante eines Mischelements aus der Draufsicht,
Fig. 2a zeigt eine schematische Darstellung eines Plattenkörpers im Längsschnitt,
Fig. 3 zeigt eine schematische Darstellung einer zweiten Ausführungsvariante eines Mischelements in einer perspektivischen Ansicht,
Fig. 3a zeigt das Mischelement gemäß Fig. 3 im Längsschnitt,
Fig. 4 zeigt eine schematische Darstellung einer zweiten Ausführungsvariante des erfindungsgemäßen photokatalytischen Oxidationsreaktors im Querschnitt,
Fig. 5 zeigt eine schematische Darstellung einer dritten Ausführungsvariante des innerhalb des Reaktormoduls angeordneten Mischelements im Querschnitt,
Fig. 5a zeigt eine schematische Darstellung einer vierten Ausführungsvariante des innerhalb des Reaktormoduls angeordneten Mischelements im Querschnitt,
Fig.6. zeigt eine schematische Darstellung einer ersten Ausführungsvariante eines LED-basierten UV-Lichtmoduls,
Fig. 7 zeigt eine schematische Darstellung einer zweiten Ausführungsvariante des LED-basierten UV-Lichtmoduls,
Fig. 8 zeigt eine schematische Darstellung einer dritten Ausführungsvariante des LED-basierten UV-Lichtmoduls,
Fig. 9 zeigt eine weitere Ausführungsvariante eines Kühlelements, und
Fig. 10 zeigt eine schematische Darstellung einer dritten Ausführungsvariante des erfindungsgemäßen photokatalytischen Oxidationsreaktors in perspektivischer Darstellung.

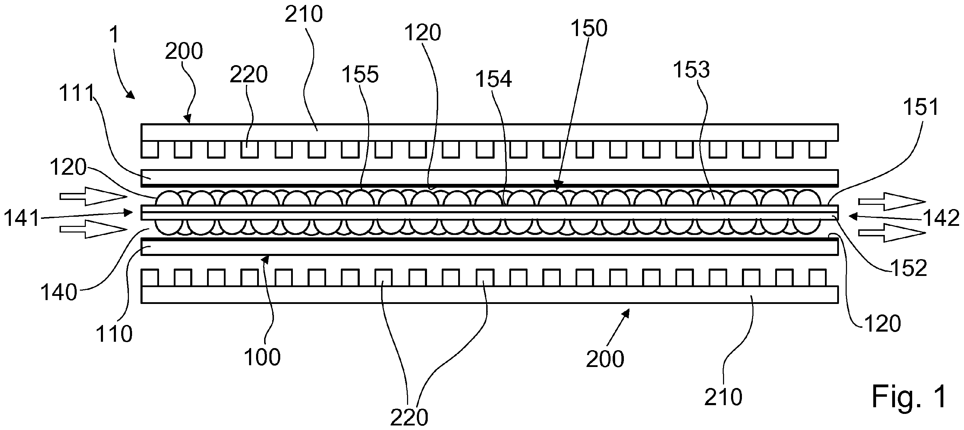

Figur 1 zeigt eine schematische Darstellung einer ersten Ausführungsvariante des erfindungsgemäßen photokatalytischen Oxidationsreaktors 1 im Längsschnitt. Da es sich vorliegend um eine schematische Darstellung handelt, sind nichterfindungswesentliche rein konstruktive Teile, wie beispielsweise ein Gehäuse, Halterungen, Dichtungen, elektrische Leitungen, ein LED-Transformator etc. teilweise nicht dargestellt.

Der Oxidationsreaktor 1 weist ein Reaktormodul 100 sowie zwei LED-basierte Lichtmodule 200 auf, die Licht im Wellenlängenbereich von 315 - 400 nm emittieren und in einen durchströmbaren Reaktionsraum 140 einstrahlen.

Das Reaktormodul 100 umfasst zwei rechteckig ausgebildete lichtdurchlässige Plattenelemente 110, 111, die mittels Distanzelemente miteinander verbunden sind (nicht dargestellt). Beide Plattenelemente 110, 111 bestehen vorliegend aus einem Borosilikatglas.

Innenseitig weisen die beiden Plattenelemente 110, 111 eine sich über ihre gesamte Fläche erstreckende photokatalytische Titandioxid-basierte Beschichtung 120, wobei das Titandioxid in der Anatas-Modifikation vorliegt. Die Dicke der photokatalytischen Beschichtung 120 ist derart ausgelegt, dass jedes der beiden lichtdurchlässigen Plattenelemente 110, 111 einen Transmissionsgrad für UV-Licht im Bereich von 0,7 - 0,8 aufweist.

Innerhalb des durchströmbaren Reaktionsraums 140 ist ein statisches Mischelement 150 ortsfest angeordnet, das in der dargestellten Ausführungsvariante aus zwei miteinander verbundenen strukturierten Plattenkörpern 151, 152 aus einem Titanblech besteht. Beide Titanbleche sind mittels eines handelsüblichen UV-beständigen Klebstoffs stoffschlüssig miteinander verbunden und bilden das Mischelement 150 aus.

Das Mischelement weist konvex ausgebildete Strukturen 153 auf, die zueinander versetzt und beabstandet angeordnet sind. Hierdurch weist das aus den beiden strukturierten Plattenkörpern 151, 152 gebildete Mischelement 150 eine planare Oberfläche 154 als auch eine Strukturoberfläche 155 auf.

Die gesamte Oberfläche des Mischelements 150, die aus der planaren Oberfläche 154 als auch der Strukturoberfläche 155 jedes strukturieren Plattenkörpers 151, 152 gebildet wird, weist weiterhin eine photokatalytische Titandioxid-basierte Beschichtung 121 auf, wobei das Titandioxid in der Anatas-Modifikation vorliegt.

Außerhalb des durchströmbaren Reaktionsraums 140 ist über den rechteckig ausgebildeten lichtdurchlässigen Plattenelementen 110, 111 jeweils das LED-basierte Lichtmodul 200 angeordnet, das UVA-Licht mit einer Hauptwelle von 365 nm emittiert und den Reaktionsraum 140 schattenfrei ausleuchtet. Das LED-basierte Lichtmodul 200 besteht aus einem stabförmigen Kühlelement 210 aus Aluminium, auf welchem einseitig mehrere lichtemittierende-Dioden 220 angeordnet sind.

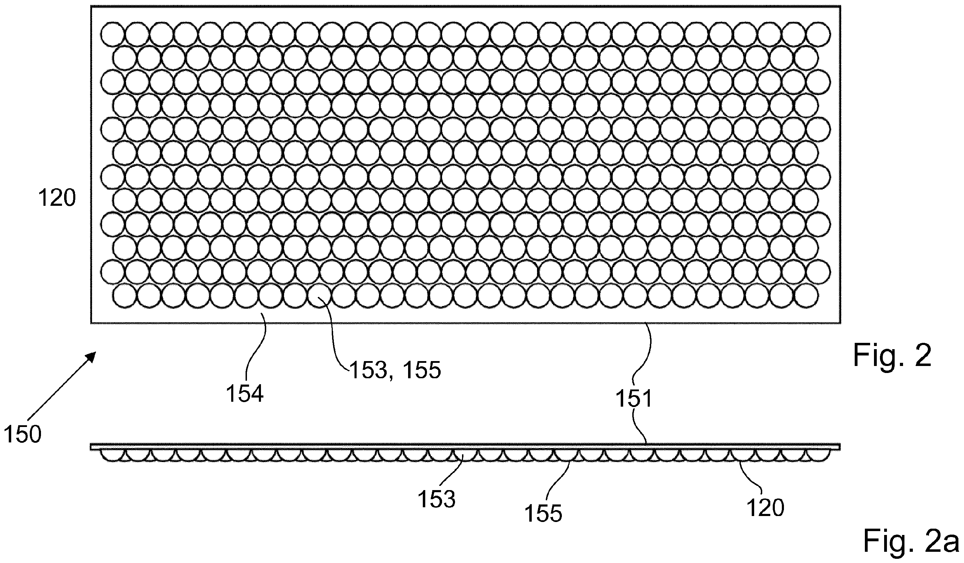

Fig. 2 zeigt eine schematische Darstellung einer ersten Ausführungsvariante des Mischelements 150 aus der Draufsicht. Der strukturierte Plattenkörper 151 weist eine planare Oberfläche 154 als auch eine Strukturoberfläche 155 auf. Die konvex ausgebildeten Strukturen 153 sind hierbei zueinander versetzt und leicht beabstandet angeordnet, wobei jede Struktur 153 von sechs weiteren Strukturen 153 umgeben ist. Eine Ausnahme bilden hierbei die am Rand angeordneten konvex ausgebildeten Strukturen 153.

In Fig. 2a ist eine schematische Darstellung eines strukturierten Plattenkörpers 151, 152 im Längsschnitt dargestellt.

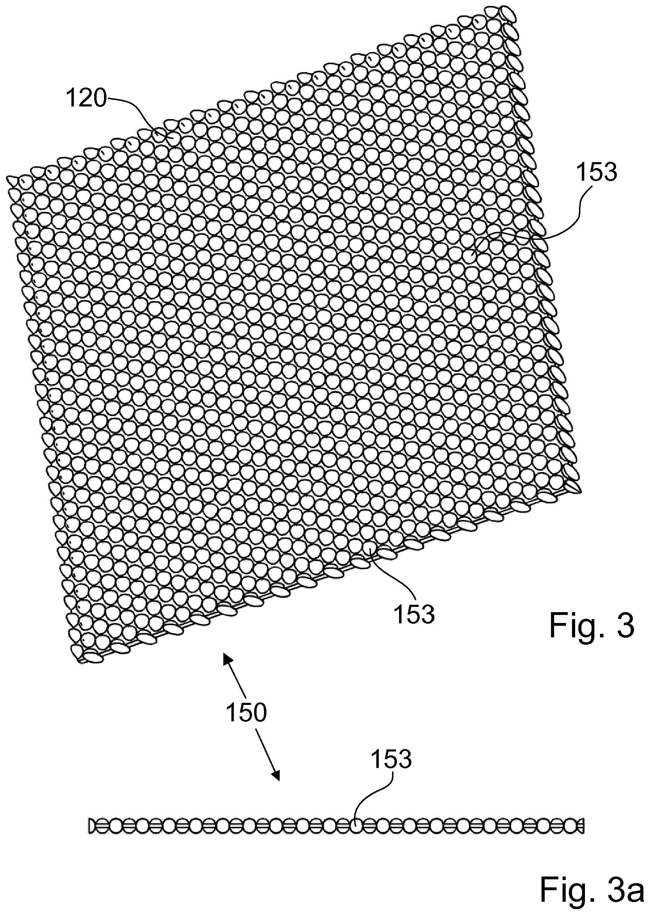

Fig. 3 zeigt eine schematische Darstellung einer zweiten Ausführungsvariante eines Mischelements 150 in einer perspektivischen Ansicht. Das Mischelement 150 unterscheidet sich zu der in Fig. 2 dargestellten Ausführungsvariante dadurch, dass es mittels eines 3D-Rapid-Prototyping Verfahrens, z.B. Lasersintertechnik, hergestellt und somit einstückig ausgebildet ist.

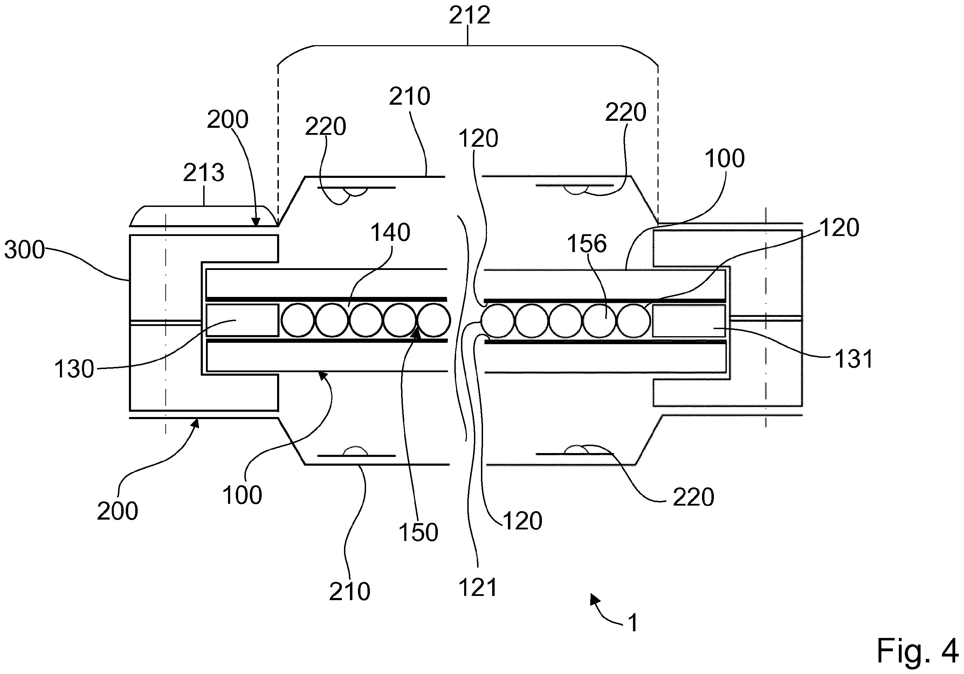

In Figur 4 ist eine schematische Darstellung einer zweiten Ausführungsvariante des erfindungsgemäßen photokatalytischen Oxidationsreaktors 1 im Querschnitt dargestellt.

Der Oxidationsreaktor 1 weist ein Reaktormodul 100, zwei Halterungen 300 sowie zwei LED-basierte Lichtmodule 200 auf. Die beiden Halterungen 300 sowie die beiden LED-basierten Lichtmodule 200 bilden dabei gleichzeitig ein Gehäuse des Oxidationsreaktors 1.

Das in der vorliegenden Ausführungsvariante gezeigte Reaktormodul 100 gleicht, bis auf das innerhalb des Reaktionsraums 140 angeordnete Mischelement 150, dem bereits in Fig. 1 ausführlich erläutertem Reaktormodul 100 und wird vorliegend zur Vermeidung von Wiederholungen nicht näher beschrieben. Vielmehr wird auf die vorstehende Diskussion der Merkmale verwiesen, die in gleicher Weise gilt.

Das innerhalb des durchströmbaren Reaktionsraums 140 angeordnete statische Mischelement 150 besteht in der dargestellten Ausführungsvariante aus zueinander versetzt angeordneten Kugeln 156. Jede Kugel 156 ist von sechs weiteren Kugeln 156 umgeben. Eine Ausnahme bilden hierbei die am Rand angeordneten Kugeln 156. Wie weiterhin aus der Darstellung ersichtlich ist, entspricht der Abstand der beiden Plattenelemente 120, 121 dem einfachen Kugeldurchmesser, d.h. dem Durchmesser der Kugel 156 inklusive der photokatalytischen Beschichtung.

Die Kugeln 156 bestehen in der vorliegenden Ausführungsvariante aus Glas und weisen eine photokatalytische Beschichtung 121 enthaltend Titandioxid in Form von Anatas auf. Ein derart ausgebildetes statische Mischelement 150 nimmt einen Volumenanteil von 0,6 bis 0,8 des Reaktionsraums 140 ein.

Neben den beiden Halterungen 300, in denen das Reaktormodul 100 angeordnet ist, wird das Reaktormodul 100 von zwei LED-basierten Lichtmodulen 200 umgeben. Jedes der beiden LED-basierten Lichtmodule 200 besteht aus einem Kühlelement 211, wobei das Kühlelement 211 einseitig mehrere lichtemittierende-Dioden 220 umfasst, die UVA-Licht mit einer Hauptwelle von 365 nm emittieren und den Reaktionsraum 140 schattenfrei ausleuchten. Das Kühlelement 211 besteht hierbei aus Aluminium. Weiterhin weist das Kühlelement 211 einen U-förmigen mittleren Bereich 212 und zwei flanschartige Bereiche 213 auf, die zugleich als Auflageflächen dienen.

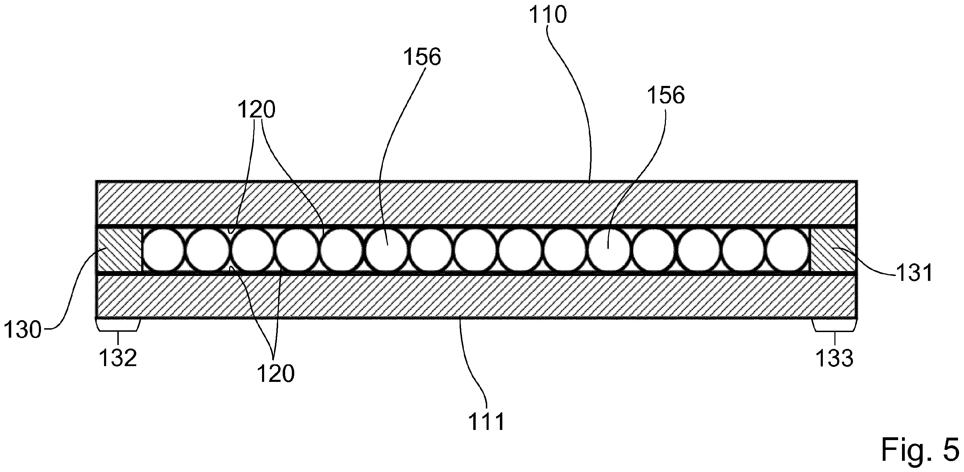

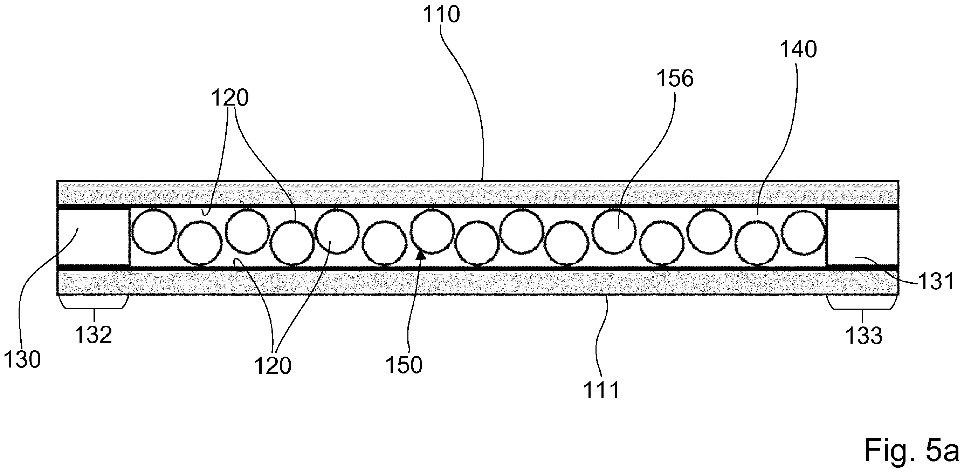

In der Fig. 5 ist das in Fig. 4 beschriebene Reaktormodul 100 separat dargestellt. Zwischen beiden Plattenelementen 110, 111 sind zwei Distanzelemente 130, 131 angeordnet, die sich jeweils in einem Randbereich 132, 133 der Plattenelemente 130, 131 entlang der Längsachse erstrecken und die Plattenelemente 130, 131 miteinander stoffschlüssig verbinden. In der vorliegenden Ausführungsvariante bestehen die Distanzelemente 130, 131 aus einem lichtstabilen Kunststoff, insbesondere aus PTFE.

Fig. 5a zeigt eine schematische Darstellung einer weiteren Ausführungsvariante des innerhalb des Reaktormoduls 100 angeordneten Mischelements 150 im Querschnitt. Im Unterschied zu der Darstellung in Fig. 5 weist das Mischelement 150 eine andere Anordnung der Kugeln 156 auf. Die Kugeln 156 in der vorliegenden Ausführungsvariante sind dabei in einer Zick-Zack-Anordnung in dem Reaktionsraum 140 gelagert. Wie weiterhin aus der Darstellung ersichtlich ist, entspricht die Höhe des Reaktionsraums 140 im Gegensatz zu der in Fig. 5 dargestellten Ausführungsvariante dem 1,2-fachen Kugeldurchmesser.

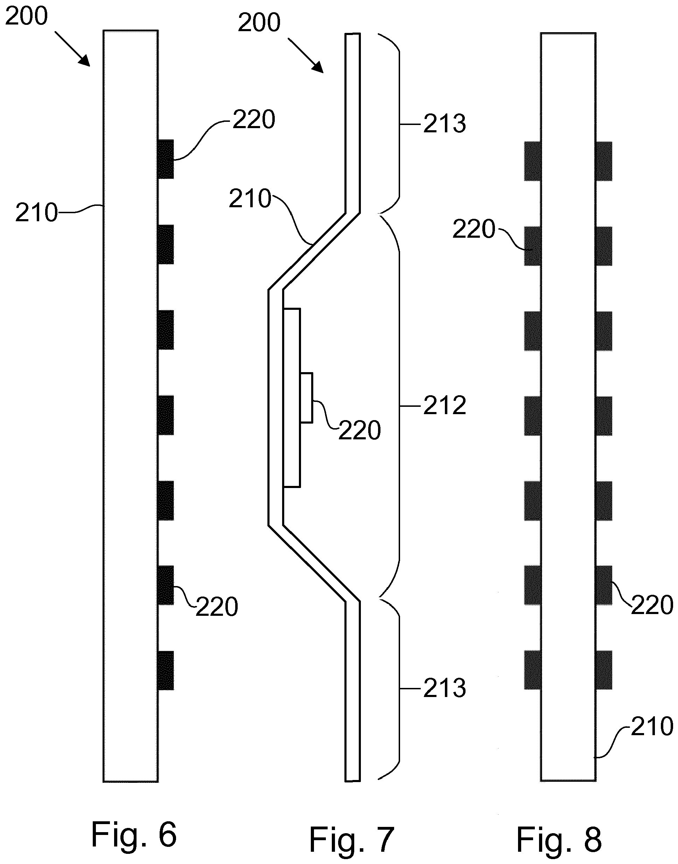

In Fig. 6. ist eine schematische Darstellung einer ersten Ausführungsvariante des LED-basierten Lichtmoduls 200 dargestellt, wie es bereits in Fig.1 beschrieben wurde. Das LED-basierte Lichtmodul 200 besteht aus einem stabförmig ausgebildeten Kühlelement 210, auf welchem einseitig mehrere lichtemittierende-Dioden 220 angeordnet sind. Das Kühlelement 210 kann beispielsweise aus Aluminium bestehen.

Fig. 7 zeigt eine schematische Darstellung einer zweiten Ausführungsvariante des LED-basierten Lichtmoduls 200, das ebenfalls ein Kühlelement 211 aufweist und einseitig mehrere angeordnete lichtemittierende-Dioden 220 umfasst. Das Kühlelement 211 kann beispielsweise aus Aluminium bestehen. Weiterhin weist das Kühlelement 211 einen U-förmigen mittleren Bereich 212 und zwei flanschartige Bereiche 213 auf, die zugleich als Auflageflächen dienen können.

In Fig. 8 sind im Unterschied zu der Ausführungsvariante in Fig. 6 die lichtemittierenden-Dioden 220 auf beiden Seiten des Kühlelements 210 angeordnet. Ein derart ausgestaltetes LED-basierten Lichtmodul 200 kann vorzugsweise zwischen zwei Reaktormodulen 100 angeordnet werden, so dass eine besonders kompakte Bauweise realisiert werden kann.

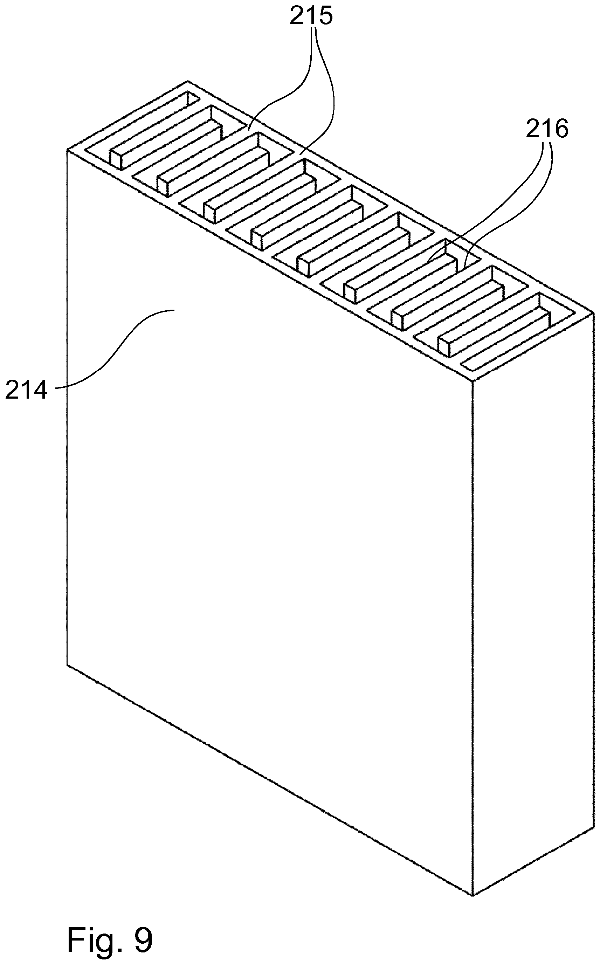

In Fig. 9 ist eine weitere Ausführungsvariante eines Kühlelements 214 gezeigt, das beispielsweise aus einem stranggepressten Aluminiumprofil besteht und innenseitig mehrere Kühlrippen 215 und einen Kühlkanal 216 für ein Kühlfluid (nicht dargestellt) aufweist.

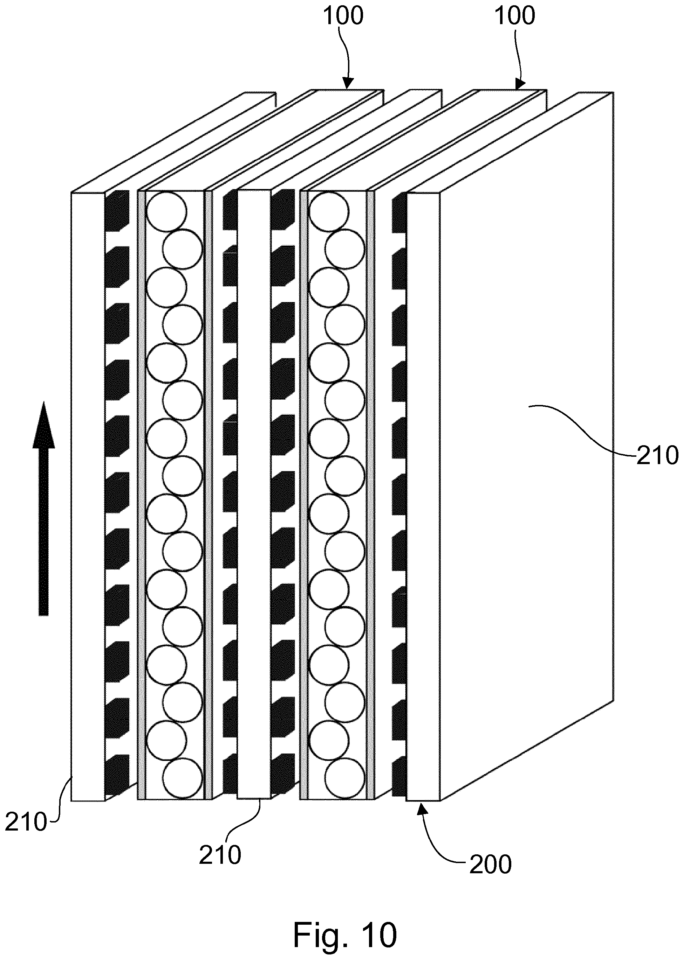

Fig. 10 zeigt eine schematische Darstellung einer dritten Ausführungsvariante des erfindungsgemäßen photokatalytischen Oxidationsreaktors 1 in perspektivischer Darstellung, der aus zwei Reaktormodulen 100, einem zwischen den beiden Reaktormodulen 100 angeordneten LED-basierten Lichtmodul 200 mit einer zweiseitigen Belegung lichtemittierender-Dioden 220 und zwei außenseitig angeordneten LED-basierten Lichtmodulen 200 gebildet wird. Der Oxidationsreaktor 1 wird vorzugsweise stehend betrieben, wie dies anhand des Pfeils dargestellt ist.

### Beispiel

Zur Bestimmung der photokatalytischen Aktivität des erfindungsgemäßen photokatalytischen Oxidationsreaktors wurde als Modellsubstanz Methylenblau verwendet und dessen Entfärbung zeitlich verfolgt.

Eingesetzt wurde ein Oxidationsreaktor bestehend aus einem zwischen zwei lichtdurchlässigen Glasscheiben eingebetteten Kugelbett mit einer Länge von 500 mm und einer Breite von 50 mm. Die lichtdurchlässigen Glasscheiben wiesen innenseitig eine Titandioxid-Beschichtung in der Anatas-Modifikation auf. Beide Titandioxid-beschichteten lichtdurchlässigen Glasscheiben wiesen einen Transmissionsgrad von 0,7 bis 0,8 für das UV-A-Licht auf. Die Bestrahlung erfolgte beidseitig über mehrere lichtemittierende-Dioden mit einer Wellenlänge im UV-A Bereich und einer Leistung von 9,67 mW/cm². Der Oxidationsreaktor wurde in Längsrichtung stehend betrieben.

Als Kugelbett wurde im Versuch 1 eine Monolage Titandioxid-beschichteter Glaskugeln (Anatas-Modifikation) mit einem Durchmesser von 4,5 mm und 6 mm zwischen den beiden lichtdurchlässigen Glasscheiben eingespannt.

Im Versuch 2 wurde als Kugelbett eine Monolage Titandioxid-beschichteter Glaskugeln (Anatas-Modifikation) mit einem Durchmesser von 3 mm zwischen den beiden lichtdurchlässigen Glasscheiben eingespannt.

Als Prüflösung wurde eine Methylenblau-Lösung mit einer Konzentration von 10 µmol/l eingesetzt, die über eine Schlauchpumpe mit einer Fließgeschwindigkeit von 100 ml/min in den Oxidationsreaktor eingeleitet wurde. Die Gesamtmesszeit betrug 15 min. Die Bestimmung der Methylenblau-Konzentration erfolgte photometrisch im Zeitintervall von 5 min.

| **Verweilzeit in min** | **Reaktorlänge in m** | **Versuch 1 Konzentration in µmol/l** | **Versuch 2 Konzentration in µmol/l** |
|---|---|---|---|
| 0 | 0 | 10,87 | 11,23 |
| 1 | 0,5 | 2,21 | 1,69 |
| 2 | 1 | 1,61 | 0,93 |
| 3 | 1,5 | 0,74 | 0,49 |

### Bezugszeichenliste

- 1: Oxidationsreaktor
- 100: Reaktormodul
- 110: Plattenelement
- 111: Plattenelement
- 120: photokatalytische Beschichtung
- 121: photokatalytische Beschichtung
- 130: Distanzelement
- 131: Distanzelement
- 140: Reaktionsraum
- 141: Einlass
- 142: Auslass
- 150: Mischelement
- 151: strukturierter Plattenkörper
- 152: strukturierter Plattenkörper
- 153: Strukturen
- 154: planare Oberfläche
- 155: Strukturoberfläche
- 156: Kugel
- 200: LED-basiertes Lichtmodul
- 210: Kühlelement
- 211: Kühlelement
- 212: U-förmiger mittlerer Bereich
- 213: flanschartiger Bereich
- 214: Kühlelement
- 215: Kühlrippen
- 216: Kühlkanal
- 220: lichtemittierende Dioden
- 300: Halterung

## Patentansprüche

1. Reaktormodul (100) zur Verwendung in einem photokatalytischen Oxidationsreaktor (1) aufweisend:
- mindestens zwei mittels eines Distanzelements (130, 131) verbundene lichtdurchlässige Plattenelemente (110, 111), die einen durchströmbaren Reaktionsraum (140) ausbilden,
- ein innerhalb des Reaktionsraums (140) angeordnetes statisches Mischelement (150), und
- ein innerhalb des Reaktionsraums (140) angeordnetes photokatalytisches Mittel.

2. Reaktormodul (100) nach Anspruch 1, wobei die zwei lichtdurchlässigen Plattenelemente (110, 111) mittels Distanzstreifen (130, 131) miteinander verbunden sind.

3. Reaktormodul (100) nach Anspruch 1 oder 2, wobei der Reaktionsraum (140) ein Verhältnis von Länge/Höhe von mindestens 50, mehr bevorzugt 100 und am meisten bevorzugt mindestens 200 aufweist.

4. Reaktormodul (100) nach einem der vorhergehenden Ansprüche, wobei das statische Mischelement (150) sich im Wesentlichen über den gesamten Reaktionsraum (140) erstreckt.

5. Reaktormodul (100) nach einem der vorhergehenden Ansprüche, wobei das statische Mischelement (150) einen Volumenanteil im Bereich von 0,2 - 0,8 des Reaktionsraums (140) aufweist.

6. Reaktormodul (100) nach einem der vorhergehenden Ansprüche, wobei das Mischelement (150) Kugelkörper (156) und/oder strukturierte Plattenkörper (151, 152) umfasst.

7. Reaktormodul (100) nach einem der vorhergehenden Ansprüche, wobei das Mischelement (150) und/oder die Plattenelemente (110, 111) mit dem photokatalytischen Mittel beschichtet sind und die Beschichtung eine Modifikation, vorzugsweise zwei unterschiedliche Modifikationen des photokatalytischen Mittels umfasst.

8. Reaktormodul (100) nach Anspruch 7, wobei die Plattenelemente (110, 111) mit dem photokatalytischen Mittel innenseitig beschichtet sind und einen Transmissionsgrad für UV-Licht im Bereich von 0,5 bis 0,9 aufweisen

9. Reaktormodul (100) nach einem der vorhergehenden Ansprüche, wobei das photokatalytische Mittel Titandioxid und/oder Molybdändisulfit umfasst.

10. LED-basiertes Lichtmodul (200) zur Verwendung in einem photokatalytischen Oxidationsreaktor (1) aufweisend ein Kühlelement (210, 211) und eine Vielzahl von auf dem Kühlelement (210, 211) angeordneten lichtemittierenden-Dioden (220), wobei die lichtemittierenden-Dioden (220) auf dem Kühlelement (210, 211) ein- oder zweiseitig angeordnet sind.

11. LED-basiertes Lichtmodul (200) nach Anspruch 10, wobei das Kühlelement (210, 211) aus einem Material besteht umfassend Aluminium, Graphit, Kupfer, Magnesium, Messing, Silber, Wolfram, Zink und/oder Mischungen hiervon.

12. Photokatalytischer Oxidationsreaktor (1) zur Oxidation von mit organischen Schadstoffen belasteten Fluiden aufweisend:
- mindestens ein Reaktormodul (100) nach einem der Ansprüche 1 bis 9, sowie
- mindestens ein außerhalb des Reaktormoduls (100) angeordnetes LED-basiertes Lichtmodul (200) nach Anspruch 10 oder 11.

13. Verfahren zur Oxidation von mit organischen Schadstoffen belasteten Fluiden umfassend die Schritte:
- Bereitstellen eines photokatalytischen Oxidationsreaktors (1) nach Anspruch 12,
- Einleiten eines mit organischen Schadstoffen belasteten Fluids, und
- Oxidieren des mit organischen Schadstoffen belasteten Fluids, so dass ein schadstofffreies Fluid erhalten wird.

14. Verfahren nach Anspruch 13, wobei das Einleiten des mit organischen Schadstoffen belasteten Fluids pulsierend erfolgt.

15. Verfahren nach Anspruch 13 oder 14, wobei dem mit organischen Schadstoffen belasteten Fluid Ozon und/oder eine Wasserstoffperoxid-haltige Lösung zugesetzt wird.
